# EUROPEAN PATENT SPECIFICATION

(11) **EP 4 283 118 B1**
(45) Date of publication and mention of the grant of the patent: **08.01.2025**
(21) Application number: 22175290.0
(22) Date of filing: 25.05.2022
(51) Int. Cl.: C25B 1/04, C25B 15/023, C25B 15/08, F03D 9/19, F03D 13/20, F03D 13/25

(54) **HYDROGEN GAS DETECTION MEANS FOR WIND TURBINES**
WASSERSTOFFGAS-DETEKTIONSMITTEL FÜR WINDTURBINEN
MOYENS DE DÉTECTION DE GAZ HYDROGÈNE POUR ÉOLIENNES

(43) Date of publication of application: 29.11.2023
(73) Proprietor: Siemens Gamesa Renewable Energy A/S, 7330 Brande (DK)
(72) Inventor: Soerensen, Johnny, 6920 Videbaek (DK)
(74) Representative: SGRE-Association

(56) References cited:
- EP-A1- 3 358 044
- US-A1- 2021 404 439

## Description

The present invention relates to a wind farm comprising a plurality of wind turbines.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Wind turbines are placed at locations providing high wind amounts. These locations can be remote onshore locations or offshore locations on the sea. For the transportation of the electrical energy, the power generated by the generator of the wind turbine travels to a transmission substation of the wind farm, where it is converted to high voltage, usually between 130 and 765kV, for long distance transmission on the transmission grid over power lines. The transmission grid connects the remote location of the wind farm to a transformer station of the electrical grid, which transforms the electricity to a voltage compatible with the electrical grid.

A problem of remote wind farms is that the distance between the wind farm and the transformer station of the electrical grid needs to be bridged. Long power lines with very high installation costs are required.

The current development of the technology of wind turbines tends to an increased size of wind turbines for harvesting more wind energy, with longer blades and higher towers. Due to the increasing size of wind turbines, more power is supplied to the grid which is to be transported from the wind farm to the nearest input point of the grid. Increasing the power transferred over the long-distance power lines results in higher requirements for the cables and higher costs.

To reduce the amount of energy transferred by the power lines of the transmission grid or to avoid the use of long-distance power lines completely, an electrolytic unit can be installed in the vicinity of the wind turbine. A wind turbine comprising an electrolytic unit generates electrical power by means of the generator and hydrogen by means of the electrolytic unit driven by at least a part of the power of the wind turbine.

Electrolytic units are power-to-gas units configured to produce hydrogen. Hence, the energy produced by the wind turbine may be used in an electrolysis process to generate hydrogen and oxygen. These gases can be used afterwards for the generation of electrical energy in fuel cells or to produce chemicals, such as ammonia or methane. The produced gases from the electrolytic unit can be transported by using a pipeline or by pressurizing the gas into a container, which is less expensive than transporting electricity directly over long-distance power lines. The transport of hydrogen, in particular in a pipeline system, is less expensive than transporting electricity directly to shore.

Hence, there is a need to provide a safe transportation system for hydrogen produced by wind turbines to a desired destination.

The use of electrolytic units in combination with wind turbines is known from the prior art, for example in the document US 5,592,028 A, where a plurality of electrolysis cells is connected to a wind farm and produce hydrogen by means of the electricity produced by the generators of the wind turbines. Similarly, the document WO 2020/095012 A1 describes an offshore wind turbine system for the largescale production of hydrogen, which includes a floating tower structure with a desalination unit and an electrolysis unit.

In offshore, a plurality of wind turbines comprising each an electrolytic unit is arranged in a wind farm. The electrolytic units of the wind turbines are connected in parallel to the hydrogen pipeline for exporting the produced hydrogen to the desired location, usually an onshore location. This connection of the pipeline with the output of the electrolytic units is done subsea.

There is a risk of hydrogen leakage at pipeline connections below sea level, which might result in the gas rising to the surface of the body of water. If a large amount of gas is released through the leakage, there is a risk of ignition of the emerging gas, e.g., if it comes into contact with electrical equipment above sea level, thereby resulting in an explosion which could damage the wind turbine components or vessels, as well as workers working there. The gas leakage represents a safety hazard.

Regarding further prior art, reference is made to US 2021/404439 A1 and to EP 3358044 A1.

It is an object of the invention to provide a wind farm which can detect hydrogen leakages below sea level, thereby mitigating the risk of explosion at the wind farm.

This is achieved by a wind farm according to claim 1.

According to the invention, a wind farm comprises a plurality of wind turbines. Each wind turbine comprises a generator, a nacelle, and a tower supporting the nacelle.

The tower has a first end mounted to a base of the wind turbine and a second end supporting the nacelle
According to the invention, each of at least two of the wind turbines further comprises an electrolytic unit electrically coupled to the generator of said wind turbine for producing hydrogen and a hydrogen output for transporting the produced hydrogen out of the wind turbine.

Hydrogen is produced from an input fluid, in particular water, by means of the energy produced by the generator of the wind turbine.

Hence, the generator generates electric power and supplies the electrolytic unit with at least a part of the power generated, as both components are electrically coupled.

Due to the fluctuation of the power generation, depending for example on weather conditions and wind levels, it is difficult to foresee the power output of a wind turbine to the electricity grid or to an energy storage device. By using a part of the energy produced by the generator to produce hydrogen, the fluctuations can be mitigated. The hydrogen can be taken out of the wind turbine by a system outlet, or a hydrogen output coupled to an output of the electrolytic unit.

Hence, at least a part of the energy produced by the generator can be used to power an electrolytic unit, so that the electricity grid is not overloaded by peaks of power generation of the fluctuating power generation facility. Additionally, if a problem in the output to the electricity grid occurs, the power can be redirected completely to the electrolytic unit so that only hydrogen, is produced. The hydrogen produced is usually in a gaseous state, which can be compressed and/or mixed with other components to a liquid state which is easier to store and/or transport.

The electrolytic unit can also be a mixed gas generator which performs electrolysis and generates other gases. For example, the electrolytic unit can perform electrolysis on water and carbon dioxide to generate a mixed gas made of hydrogen and carbon monoxide. Alternatively, hydrogen can be mixed with natural gas, which increases the hydrogen/carbon ratio of the hydrogen and gives it a flame speed up to eight times higher than compressed natural gas.

The electrolytic unit can be housed in a housing. Due to the harsh environmental conditions of wind turbine locations, the components of the electrolytic unit are exposed to rain and dirt, as well as to salt for offshore wind turbines installed at the sea. This results in a fast corrosion of the metals of the components. In order to prevent corrosion, components of the wind turbine installed comprising metallic parts exposed to the atmosphere, such as an electrolytic unit installed on the platform of the wind turbine, are usually housed in a housing.

According to the invention, each hydrogen output is connected to a manifold by means of a manifold input, wherein the manifold is arranged below sea level and comprises a manifold output configured to be connected to a hydrogen pipeline for transporting the hydrogen produced by the wind farm out of the wind farm.

The connection of the manifold with the hydrogen output of each wind turbine can be achieved by individual gas pipelines between the gas producing wind turbines and the manifold.

The manifold is coupled to a hydrogen pipeline by means of a manifold output.

According to the invention, the wind farm further comprises gas detection means for detecting a hydrogen leak at the manifold.

The gas detection means are configured to detect a leakage of gas and warn the operators and/or automatically shut down the wind turbine and/or stop the production of hydrogen to mitigate any risks which could originate from an explosion of emerging gases parting from the hydrogen leakage.

According to a preferred embodiment of the invention, the gas detection means is arranged above the manifold in such a way that hydrogen leaking from the manifold can be captured by the gas detection means.

The gas detection means is arranged above the manifold, i.e., at a lower water depth than the manifold or in other words closer to the sea level than the manifold. By arranging the gas detection means above the manifold, gas leakage can be more easily captured, as the density of the hydrogen gas is much lower than the one of water and the hydrogen rises from the leakage upwards. The rising gas is then captured by the gas detection means, which results in two advantages. Firstly, the emerging gases from the leakage can be safely stored at the gas detection means, thereby preventing the gases from rising to the surface of the body of water. Secondly, by installing a sensor or any other type of detector for detecting, directly or indirectly, the presence of hydrogen, the workers can be warned, and the risks of an explosion are mitigated. The workers can then perform the necessary repairment tasks of the hydrogen leakage at the manifold.

Alternatively, the manifold can be arranged within the gas detection means. In this case, the gas detection means also protects the manifold against currents and marine growth. If the gas detection means completely seal the manifold, pressure relief means can be installed to avoid any pressure increase due to a leakage.

According to another preferred embodiment of the invention, the gas detection means comprises buoyancy means such as a buoy.

Buoyancy means provide an upward force to support at least in part the downward force due to the weight of the gas detection means, thereby keeping the gas detection means above the manifold and avoiding a crash between the gas detection means and the manifold.

The buoyancy means can be a single buoy, or a plurality of buoys arranged at the gas detection means. The buoyancy means can be coupled by wires or any other coupling means to the surface of the gas detection means or be installed directly on the surface of the gas detection means. The buoyancy means can also be arranged within the body of the gas detection means or below the gas detection means.

According to the invention, the gas detection means comprises a container filled with a filling fluid. The filling fluid has a higher density than hydrogen. The filling fluid can have a lower density than the water of the body of water in which the wind farm is installed. Alternatively, the filling fluid can have a similar density than the water in which the wind farm is installed.

The container comprises at least an opening for allowing the hydrogen to enter the container. Preferably, the container comprises the at least one opening at a surface facing the manifold so that gas leaking from the manifold can enter through the opening and get inside the container. The container can for example be a box placed above the manifold with the face of the box facing the manifold being a at least partially open surface, so that leaked gas exiting the manifold can be captured by the box.

After installing the gas detection means and before any hydrogen gas leakage occurs, the container is filled up to a certain fill level with the filling fluid.

In case of a hydrogen leakage from the manifold, the leaked hydrogen enters the container of the gas detection means through the opening. As hydrogen has a lower density than the filling fluid, the hydrogen rises to the top of the container while pushing the filling fluid out of the container through the opening through which the hydrogen entered the container. This will result in the fill level of the filling fluid inside the container to drop, which can be detected by sensing means.

According to another preferred embodiment of the invention, the filling fluid is water. Water is available onsite, as the wind turbine is erected in a body of water. Therefore, water can easily flow in and out of the container. In addition, in case of a hydrogen leakage, the water within the container is replaced by the hydrogen and the water inside the container can be withdrawn directly to the body of water without having to properly dispose of it, as it is the same fluid.

According to another preferred embodiment of the invention, the container comprises a level sensor configured to detect the fill level of the filling fluid, wherein the level sensor comprises floating means configured to float on the filling fluid such as a float arm and a floating body coupled to a first end of the float arm.

The level sensor can be positioned inside the container and comprise a float arm and a floating body coupled to a first end of the float arm. As one example, the pivotable float arm of the level sensor utilizes the buoyancy of the floating body to measure the fill level of the container.

Additionally, level sensor can be electrically connected to a control unit for signaling a change of the fill level inside the container.

The angular position of the float arm and the floating body can provide an indication of the fill level of the container.

The float arm may pivot about a pivot point (e.g., pivotable base). The float arm can be coupled between the pivotable base and the floating body. The float arm can bend at a right angle to form a float arm elbow. As the floating body moves up or down relative to the fill level, the float arm pivots about the pivot point.

A resistor can be installed between the float arm and the surface on which the pivot point is arranged. Through the pivoting of the float arm, the distance between the coupling points of the resistor will change, resulting in a change in resistance measurement with which the fill level can be determined.

Alternatively, a translational float arm can be installed, which moves in a longitudinal direction following the fill level of the filling fluid. The resistor can then be installed between the float arm and an end of the translational axis on which the float arm can move.

According to another preferred embodiment of the invention, the level sensor is configured to detect a leakage of hydrogen by detecting when the floating means sink below a threshold value. This is advantageous, as workers can be notified when a critical level of leaking gas has been reached.

According to another preferred embodiment of the invention, the filling fluid is air. Air has, like water, a higher density than hydrogen. Therefore, the level of air will drop when hydrogen enters the container and air will be withdrawn through the opening of the container. As air is an environmentally friendly gas, it can be withdrawn directly to the body of water without having to properly dispose of it.

Additionally, by having the container filled with air, the components within the container will not corrode as fast as with other fluids such as saltwater from the body of water. This results in a longer lifetime of the components of the gas detection means, in particular the sensing means installed within the container.

According to another preferred embodiment of the invention, the container comprises a hydrogen sensor configured to detect the hydrogen leak. Once the fill level of the container drops and the hydrogen sensor gets in contact with the hydrogen, it can send a warning to notify workers of the leak.

According to another preferred embodiment of the invention, the gas detection means is attached to the manifold by wires. Wires provide a strong coupling to maintain the gas detection means at the desired position.

An alternative to wires to attach the gas detection means are anchors.

According to another preferred embodiment of the invention, the gas detection means is coupled to the manifold by means of a fluid connection. This is advantageous, as a hydrogen leak at the manifold is directly transported to the gas detection means without the risk that strong currents shift the hydrogen leak away from the gas detection means before entering them.

According to another preferred embodiment of the invention, the wind farm comprises a baseplate or mud mat placed on a bottom, preferably on a seabed, and coupled to the gas detection means for providing a support to the gas detection means. This is advantageous for the stability of the gas detection means against strong currents.

According to a preferred embodiment of the invention, the gas detection means comprises a ballast weight providing a downward force on said gas detection means. A ballast weight is an antibuoyancy means. Together with the buoyancy means, an equilibrium position of the gas detection means can be determined which is able to withstand the strong currents of the body of water. The ballast weight is coupled to the gas detection means in such a way that the downward force of the ballast weight is conveyed to the other components of the gas detection means, such as the container.

Preferably, the ballast weight is made of concrete. Alternatively, coarse gravel can also be used, which provides ballast weight at low cost. The gravel can be filled in after the gas detection means is deployed at the installation place.

Preferably, the ballast weight rests on the ground of the body of water.

According to another preferred embodiment of the invention, the gas detection means is reinforced, in particular with a mesh of steel bars at the body of the gas detection means. Such a mesh extends within the body as a skeleton. A skeleton improves stiffness, so the body is able to better withstand any bending strain it is subjected to. This also makes the gas detection means more pressure resistant at different water depths.

According to another preferred embodiment of the invention, the manifold and the gas detection means can be arranged at a gas producing wind turbine. Alternatively, the manifold and the gas detection means can be arranged at a wind turbine which does not produce gas, i.e., which has no electrolytic unit.

According to another preferred embodiment of the invention, the manifold and the gas detection means are arranged inside the tower of the wind turbine.

Arranging the manifold and the gas detection inside the tower protects the components against marine growth and strong currents.

According to another preferred embodiment of the invention, the manifold and the gas detection means are arranged at or inside a foundation of the wind turbine.

Arranging the manifold and the gas detection at the foundation protects the components against marine growth and strong currents.

According to another preferred embodiment of the invention, the manifold and the gas detection means are housed in a housing. This protects the components against marine growth and strong currents.

According to another preferred embodiment of the invention, the gas detection means comprises transmitting means for sending a warning signal about the hydrogen leak. The transmitting means transmit output signals from the sensing means to a control unit or to any other evaluation means, for example to give feedback about the fill level of the container or to warn about a hydrogen leakage. The transmitting means may be any kind of transmitting means, such as a cable or wireless transmitting means, such as a wireless local network emitter.

According to another preferred embodiment of the invention, the transmitting means are wireless transmitting means.

According to another preferred embodiment of the invention, the wind farm further comprises a control system for monitoring the hydrogen flow.

The control system can monitor the hydrogen flow to check for example if there is a leakage and the electrolytic unit should be shut down to avoid any explosions which could damage the wind turbine components and workers. The control system can monitor the flow and the pressure of the hydrogen at the manifold or inside the pipelines.

According to another preferred embodiment of the invention, the manifold comprises a further manifold output configured to be connected to a further hydrogen pipeline for transporting the hydrogen produced by the wind farm out of the wind farm.

Having two hydrogen pipelines ensures that, in case of failure due to for example an obstruction of the pipeline, hydrogen can still be exported through the second pipeline. This avoids that hydrogen builds up in the pipelines and a pressure increase, which can result in an explosion.

According to another preferred embodiment of the invention, the plurality of wind turbines is arranged in at least two wind turbine arrays comprising at least one manifold and one gas detection means per wind turbine array, wherein the manifold of each wind turbine array is coupled to the manifold of at least another wind turbine array by means of a hydrogen connection.

The interconnection of the manifold of wind turbine arrays has the advantage that the flow of hydrogen can be diverted to another manifold if one pipeline of a specific wind turbine array fails due to for example an obstruction. Hence, the hydrogen can still be exported out of the wind farm through another wind turbine array by diverting the flow through the operational wind turbine arrays and then exporting the hydrogen out of the wind farm.

According to another preferred embodiment of the invention, the manifold of each wind turbine array is directly connected to the hydrogen pipeline and/or to any further hydrogen pipeline for transporting the hydrogen produced by the wind farm out of the wind farm.

This is particularly advantageous for an efficient extraction of hydrogen out of each manifold in case of obstructions or due to maintenance reasons and it further mitigates the risk of an explosion due to accumulated hydrogen.

According to another preferred embodiment of the invention, further gas detection means are arranged above the gas detection means to detect a leakage of the gas detection means.

According to another preferred embodiment of the invention, the manifold is coupled to a plurality of array
According to another preferred embodiment of the invention, the plurality of wind turbines is arranged in at least two wind turbine arrays, wherein each wind turbine array is connected to a manifold, wherein the manifold is arranged below sea level and comprises a manifold output configured to be connected to a hydrogen pipeline for transporting the hydrogen produced by the wind farm out of the wind farm, wherein the plurality of wind turbines further comprises gas detection means for detecting a hydrogen leak at the manifold.

Alternatively, a leakage at the gas detection means can be detected by checking if the filling fluid is still present in the container, if the filling fluid is a fluid different from the water of the body of water. This can be detected by the level sensor or by any other sensor installed at the gas detection means.

In order to facilitate the understanding of the characteristics of the invention and being an integral part of this specification, some drawing sheets are attached on which figures, with an illustrative but not limiting character, the following is represented:
Figure 1 shows a wind farm comprising a plurality of wind turbines connected to a manifold according to a first embodiment of the invention.
Figure 2 shows a gas detection means above the manifold according to a second embodiment of the invention.
Figure 3 shows another gas detection means above the manifold according to another embodiment of the invention.
Figure 4 shows a gas leakage at the manifold.
Figure 5 shows the gas detection means arranged above the manifold.
Figure 6 shows the manifold arranged within the gas detection means.
Figure 7 shows a gas detection means comprising a level sensor.
Figure 8 shows a gas detection means comprising two ballast weights.
Figure 9 shows a gas detection means comprising a ballast weight and coupled to a mud mat placed on the seabed.
Figure 10 shows a plurality of interconnected wind turbine arrays according to an embodiment of the invention.
Figure 11 shows a plurality of interconnected wind turbine arrays according to another embodiment of the invention.
Figure 12 shows a plurality of interconnected wind turbine arrays according to another embodiment of the invention.

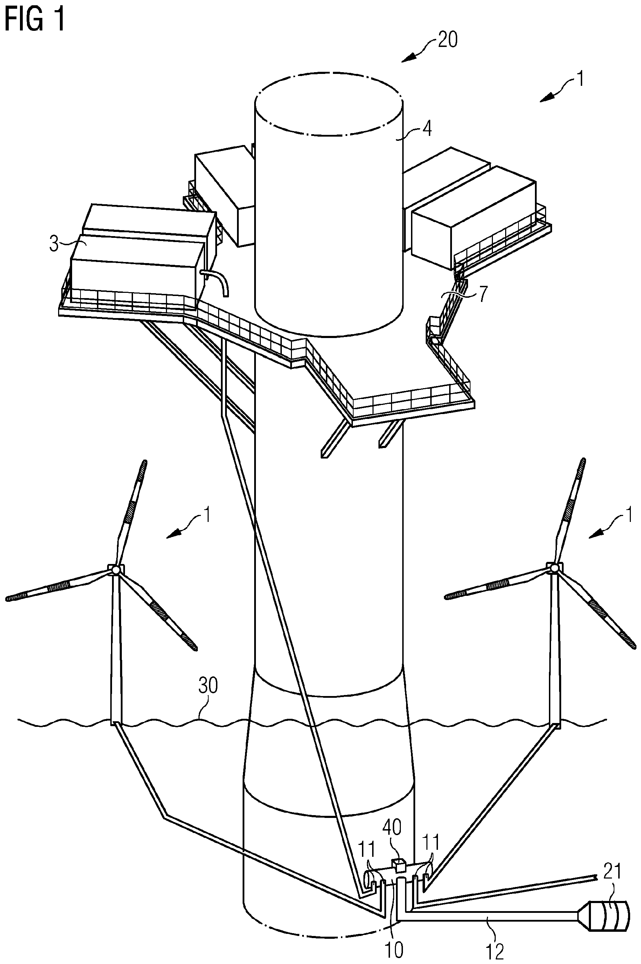

Figure 1 shows a wind farm 20 comprising a plurality of wind turbines 1. The wind turbines comprise each a generator 2, a nacelle 6, and a tower 4 supporting the nacelle 6, as well as an electrolytic unit 3 electrically coupled to the generator 2 for producing hydrogen and a hydrogen output 8 for transporting the produced hydrogen out of the wind turbine.

Each hydrogen output 8 is connected to a manifold 10 by means of a manifold input 11, wherein the manifold 10 is arranged below sea level 30 and comprises a manifold output 12 configured to be connected to a hydrogen pipeline 21 for transporting the hydrogen produced by the wind farm 20 out of the wind farm 20.

The wind farm 20 further comprises gas detection means 40 for detecting a hydrogen leak at the manifold 10.

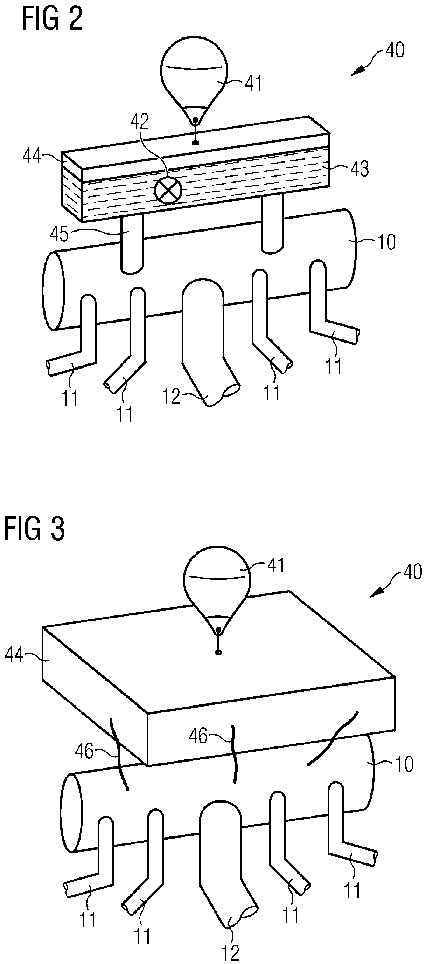

Figure 2 shows a gas detection means 40 arranged above the manifold 10, i.e., at a lower water depth than the manifold 10 or in other words closer to the sea level 30 than the manifold 10.

The manifold 10 comprises a plurality of manifold inputs 11 connected to the gas producing wind turbines 1 and one manifold output 12 connected to the hydrogen pipeline 21.

The gas detection means 40 is coupled to the manifold 10 by means of two fluid connections 45.

The gas detection means 40 comprises a buoy as the buoyancy means 41 and a container 44 filled with a filling fluid 43. A hydrogen sensor 42 is arranged inside the container 44 within the filling fluid 43 to detect the presence of hydrogen in the container 44.

Figure 3 shows another gas detection means 40 above the manifold 10 according to another embodiment of the invention. In this embodiment, the gas detection means 40 comprises a container 44 and is coupled to the manifold 10 by a plurality of wires 46.

The container 44 is a box placed above the manifold 10 with the face of the box facing the manifold 10 being a at least partially open surface, so that leaked gas exiting the manifold 10 can be captured by the box.

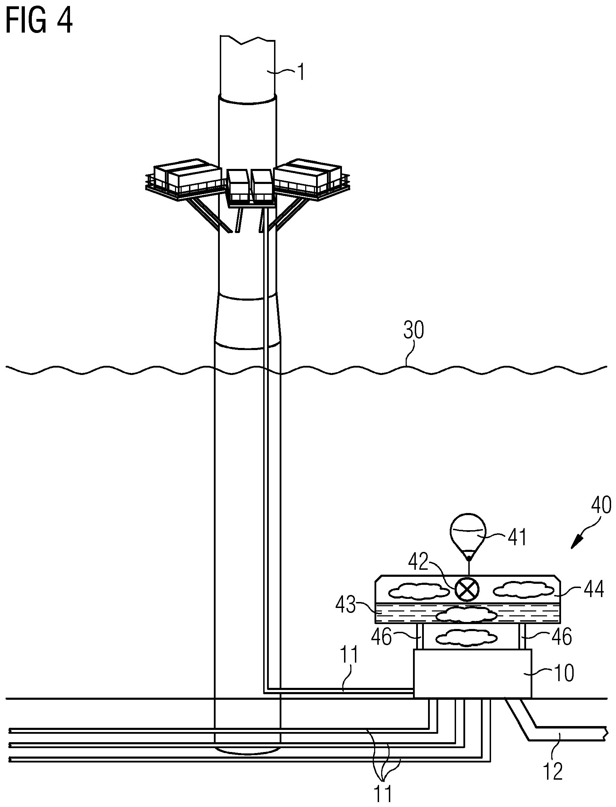

Figure 4 shows a gas leakage at the manifold 10. The leaked hydrogen is captured by the gas detection means 40, whereby the hydrogen pushes the filling fluid 43 out of the container 44, lowering the fill level of the filling fluid 43 and resulting in the hydrogen sensor 42 to be exposed to the hydrogen, thereby detecting the presence of hydrogen in the container 44.

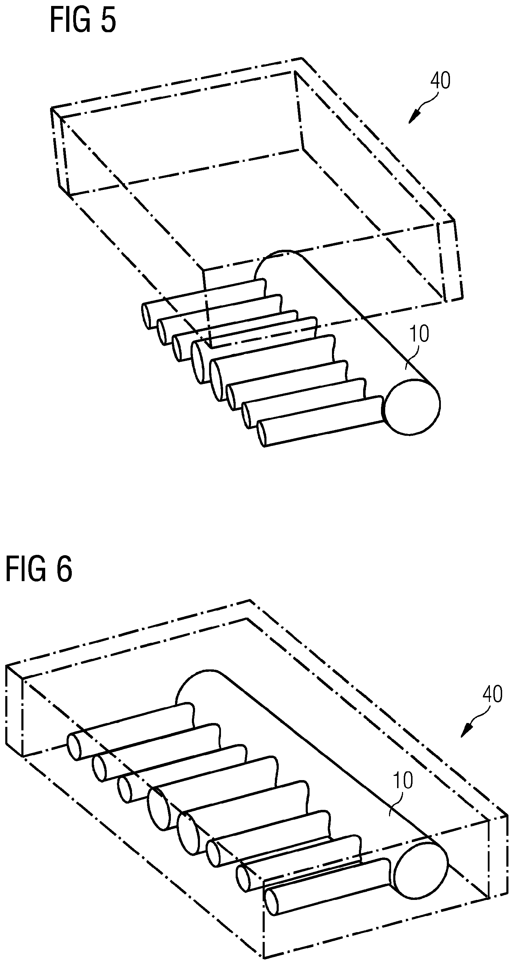

Figure 5 shows the gas detection means 40 arranged above the manifold 10. Gas leaking from the manifold 10 is then captured by the gas detection means 40 while it rises up.

Figure 6 shows the manifold 10 arranged within the gas detection means 40. In this embodiment, the gas detection means 40 also protects the manifold 10 against currents and marine growth.

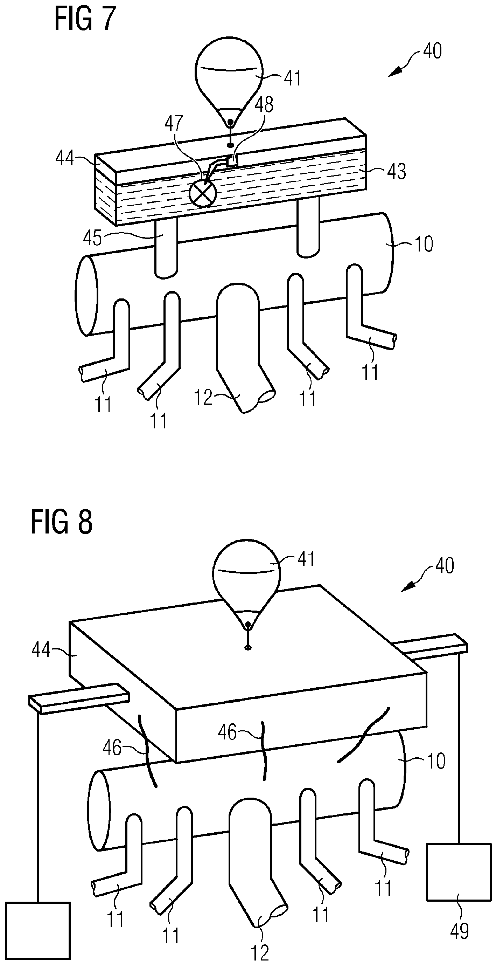

Figure 7 shows a gas detection means 40 comprising a level sensor 47. The level sensor 47 comprises floating means 48 configured to float on the filling fluid.

The level sensor 47 is positioned inside the container 44 and the floating means 48 are a float arm and a floating body coupled to a first end of the float arm. The float arm of the level sensor utilizes the buoyancy of the floating body to measure the fill level of the container 44.

Figure 8 shows a gas detection means comprising two ballast weights 49. The ballast weights 49 provide a downward force on the gas detection means 40. Together with the buoyancy means 41, an equilibrium position of the gas detection means 40 is determined which is able to withstand the strong currents of the body of water. The ballast weights 49 are coupled to the body of the gas detection means 40 by arms.

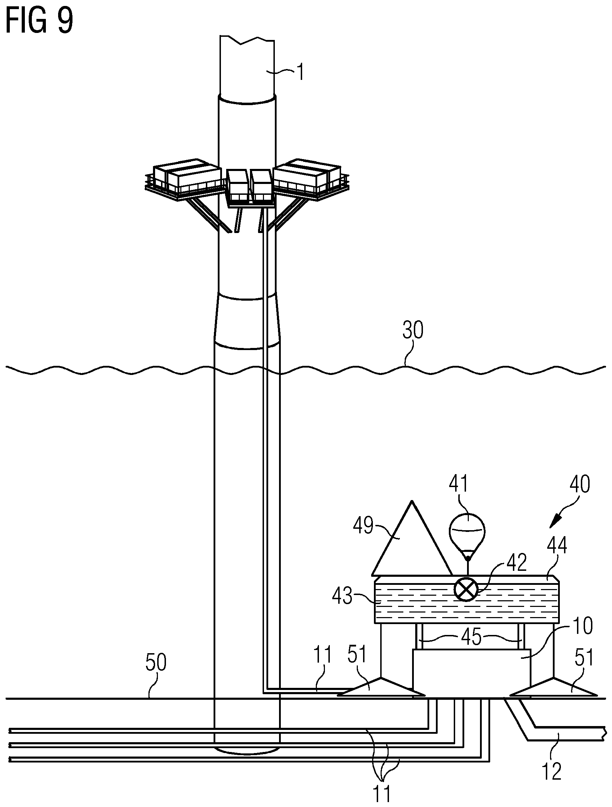

Figure 9 shows a gas detection means 40 comprising a ballast weight 49 and coupled to a mud mat 51 placed on the seabed 50 by means of legs. This configuration is advantageous for the stability of the gas detection means 40 against strong currents.

The gas detection means 40 is coupled to the manifold 10 by means of two fluid connections 45. It is also possible to couple the gas detection means 40 is coupled to the manifold 10 by wires 46 and to have the face of the gas detection means 40 facing the manifold 10 open so that gas emerging from the manifold 10 are captured by the gas detection means 40.

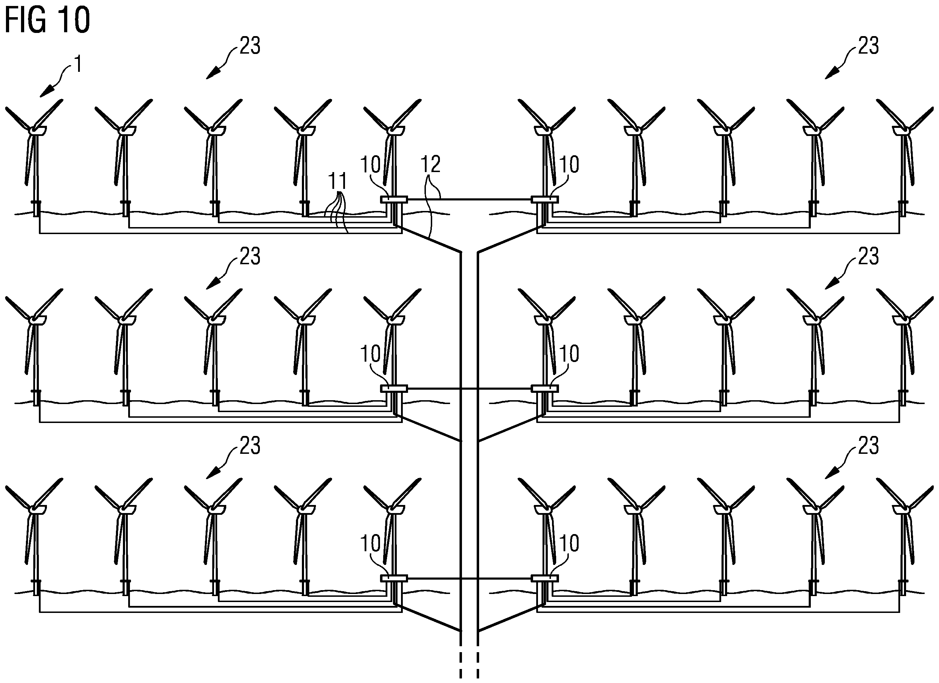

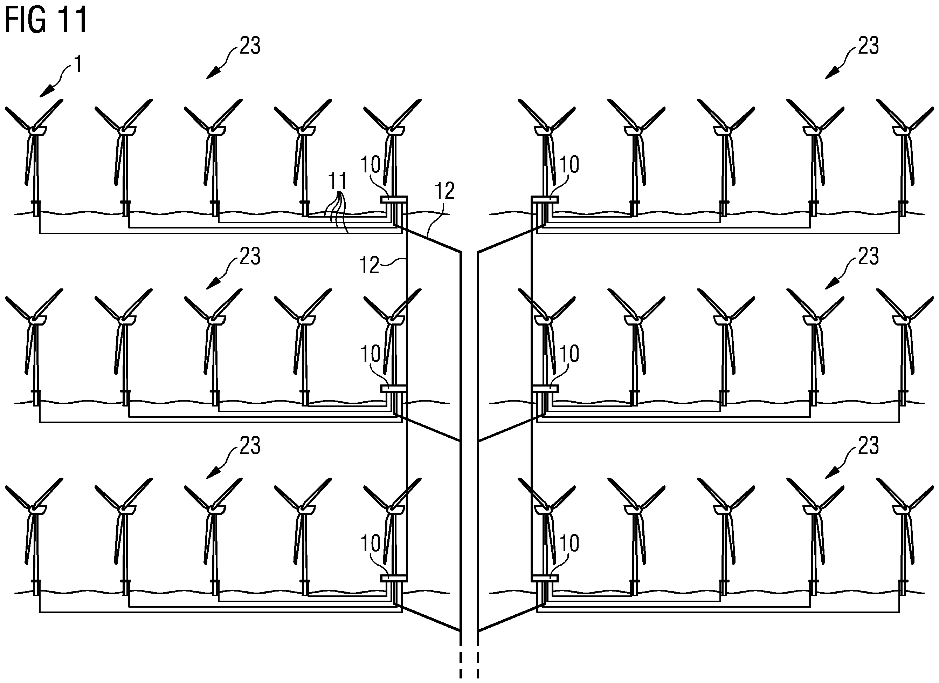

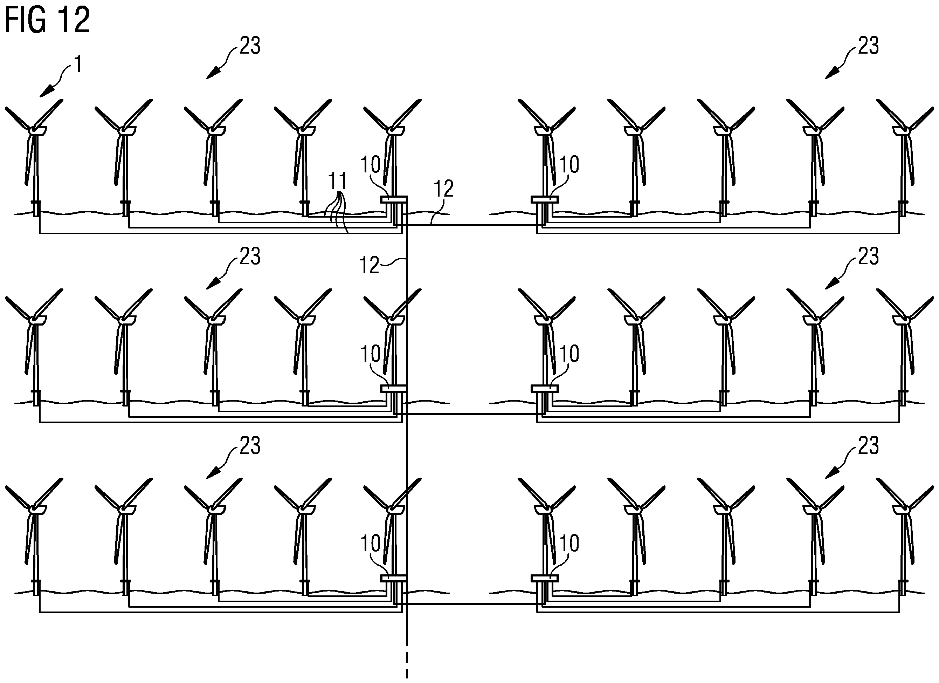

Figures 10 to 12 show a plurality of interconnected wind turbine arrays 23 in different configurations. The manifold output 12 and the further manifold output of each wind turbine array 23 is connected to either a neighboring wind turbine array 23 or to a hydrogen pipeline 21.

A similar connection as the one shown in Figures 10 to 12 can be done with a plurality of wind farms 20 by having the manifold 10 of each wind farm 20 coupled to the manifold 10 of at least another wind farm 20 by means of a hydrogen connection.

### Reference numbers

- 1: Wind turbine
- 2: Generator
- 3: Electrolytic unit
- 4: Tower
- 6: Nacelle
- 7: Platform
- 8: Hydrogen output

- 10: Manifold
- 11: Manifold input
- 12: Manifold output

- 20: Wind farm
- 21: Hydrogen pipeline
- 23: Wind turbine array

- 30: Sea level

- 40: Gas detection means
- 41: Buoyancy means
- 42: Hydrogen sensor
- 43: Filling fluid
- 44: Container
- 45: Fluid connection
- 46: Wire
- 47: Level sensor
- 48: Floating means
- 49: Ballast weight

- 50: Seabed
- 51: Mud mat

## Claims

1. A wind farm (20) comprising a plurality of wind turbines (1), each wind turbine (1) comprising a generator (2), a nacelle (6), and a tower (4) supporting the nacelle (6),
wherein each of at least two of the wind turbines (1) further comprises an electrolytic unit (3) electrically coupled to the generator (2) of said wind turbine (1) for producing hydrogen and a hydrogen output (8) for transporting the produced hydrogen out of the wind turbine (1),
wherein each hydrogen output (8) is connected to a manifold (10) by means of a manifold input (11), wherein the manifold (10) is arranged below sea level (30) and comprises a manifold output (12) configured to be connected to a hydrogen pipeline (21) for transporting the hydrogen produced by the wind farm (20) out of the wind farm (20),
**characterised in that** said wind farm (20) further comprises gas detection means (40) for detecting a hydrogen leak at the manifold (10), wherein the gas detection means (40) comprises a container (44) filled with a filling fluid (43) having a higher density than hydrogen, wherein the container (44) comprises at least an opening for allowing the hydrogen to enter the container (44).

2. The wind farm (20) according to claim 1, wherein the gas detection means (40) is arranged above the manifold (10) in such a way that hydrogen leaking from the manifold (10) can be captured by the gas detection means (40).

3. The wind farm (20) according to any of the preceding claims, wherein the filling fluid (43) is water.

4. The wind farm (20) according to any of the preceding claims, wherein the container (44) comprises a level sensor (47) configured to detect the fill level of the filling fluid (43), wherein the level sensor (47) comprises floating means (48) configured to float on the filling fluid (43) such as a float arm and a floating body coupled to a first end of the float arm.

5. The wind farm (20) according to any of the preceding claims, wherein the filling fluid (43) is air.

6. The wind farm (20) according to any of the preceding claims, wherein the container (44) comprises a hydrogen sensor (42) configured to detect the hydrogen leak.

7. The wind farm (20) according to any of the preceding claims, wherein the gas detection means (40) is attached to the manifold (10) by wires (46).

8. The wind farm (20) according to any of the preceding claims, wherein the gas detection means (40) is coupled to the manifold (10) by means of a fluid connection (45).

9. The wind farm (20) according to any of the preceding claims, wherein said wind farm (20) comprises a baseplate or mud mat (51) placed on a bottom, preferably on a seabed (50), and coupled to the gas detection means (40) for providing a support to the gas detection means (40).

10. The wind farm (20) according to any of the preceding claims, wherein the gas detection means (40) comprises a ballast weight (49) providing a downward force on said gas detection means (40).

11. The wind farm (20) according to any of the preceding claims, wherein the gas detection means (40) comprises buoyancy means (41) such as a buoy.

12. The wind farm (20) according to any of the preceding claims, wherein the manifold (10) and the gas detection means (40) are arranged at or inside a foundation of the wind turbine (1).

13. The wind farm (20) according to any of the preceding claims, wherein the gas detection means (40) comprises transmitting means for sending a warning signal about the hydrogen leak.

14. The wind farm (20) according to any of the preceding claims, wherein the plurality of wind turbines (1) is arranged in at least two wind turbine arrays (23) comprising at least one manifold (10) and one gas detection means (40) per wind turbine array (23), wherein the manifold (10) of each wind turbine array (23) is coupled to the manifold (10) of at least another wind turbine array (23) by means of a hydrogen connection.

## Patentansprüche

1. Windpark (20) mit einer Mehrzahl von Windturbinen (1), wobei jede Windturbine (1) einen Generator (2), eine Gondel (6) und einen Turm (4), der die Gondel (6) trägt, aufweist,
wobei jede von mindestens zwei der Windturbinen (1) ferner eine Elektrolyseeinheit (3), die elektrisch mit dem Generator (2) der Windturbine (1) verbunden ist, um Wasserstoff zu erzeugen, und einen Wasserstoffausgang (8) zum Abtransport des erzeugten Wasserstoffs aus der Windturbine (1) aufweist,
wobei jeder Wasserstoffausgang (8) über einen Verteilereingang (11) mit einem Verteiler (10) verbunden ist, wobei der Verteiler (10) unter dem Meeresspiegel (30) angeordnet ist und einen ersten Verteilerausgang (12) aufweist, der zum Anschluss an eine erste Wasserstoffpipeline (21) zum Abtransport des von dem Windpark (20) erzeugten Wasserstoffs aus dem Windpark (20) gestaltet ist,
**dadurch gekennzeichnet, dass** der Windpark (20) ferner ein Gaserkennungsmittel (40) zum Erkennen eines Wasserstofflecks an dem Verteiler (10) umfasst, wobei das Gaserkennungsmittel (40) einen Behälter (44) umfasst, der mit einem Füllfluid (43) gefüllt ist, das eine höhere Dichte als Wasserstoff aufweist, wobei der Behälter (44) mindestens eine Öffnung umfasst, um den Eintritt des Wasserstoffs in den Behälter (44) zu ermöglichen.

2. Windpark (20) nach Anspruch 1, wobei das Gaserkennungsmittel (40) derart über dem Verteiler (10) angeordnet ist, dass Wasserstoff, der aus dem Verteiler (10) leckt, von dem Gaserkennungsmittel (40) aufgefangen werden kann.

3. Windpark (20) nach einem der vorhergehenden Ansprüche, wobei das Füllfluid (43) Wasser ist.

4. Windpark (20) nach einem der vorhergehenden Ansprüche, wobei der Behälter (44) einen Füllstandsensor (47) umfasst, der dafür gestaltet ist, den Füllstand des Füllfluids (43) zu erkennen, wobei der Füllstandsensor (47) ein Schwimmermittel (48) umfasst, das dafür gestaltet ist, auf dem Füllfluid (43) zu schwimmen, wie beispielsweise einen Schwimmerarm und einen Schwimmerkörper, der mit einem ersten Ende des Schwimmerarms gekoppelt ist.

5. Windpark (20) nach einem der vorhergehenden Ansprüche, wobei das Füllfluid (43) Luft ist.

6. Windpark (20) nach einem der vorhergehenden Ansprüche, wobei der Behälter (44) einen Wasserstoffsensor (42) umfasst, der dafür gestaltet ist, das Wasserstoffleck zu erkennen.

7. Windpark (20) nach einem der vorhergehenden Ansprüche, wobei das Gaserkennungsmittel (40) durch Drähte (46) an dem Verteiler (10) angebracht ist.

8. Windpark (20) nach einem der vorhergehenden Ansprüche, wobei das Gaserkennungsmittel (40) über eine Fluidverbindung (45) mit dem Verteiler (10) gekoppelt ist.

9. Windpark (20) nach einem der vorhergehenden Ansprüche, wobei der Windpark (20) eine Grundplatte oder eine Schlammmatte (51) umfasst, die auf einem Boden, vorzugsweise auf einem Meeresboden (50), platziert und mit dem Gaserkennungsmittel (40) gekoppelt ist, um eine Abstützung für das Gaserkennungsmittel (40) bereitzustellen.

10. Windpark (20) nach einem der vorhergehenden Ansprüche, wobei das Gaserkennungsmittel (40) ein Ballastgewicht (49) umfasst, das eine abwärts gerichtete Kraft auf das Gaserkennungsmittel (40) ausübt.

11. Windpark (20) nach einem der vorhergehenden Ansprüche, wobei das Gaserkennungsmittel (40) ein Auftriebsmittel (41), wie beispielsweise eine Boje, umfasst.

12. Windpark (20) nach einem der vorhergehenden Ansprüche, wobei der Verteiler (10) und das Gaserkennungsmittel (40) an oder im Inneren eines Fundaments der Windkraftanlage (1) angeordnet sind.

13. Windpark (20) nach einem der vorhergehenden Ansprüche, wobei das Gaserkennungsmittel (40) ein Übertragungsmittel zum Senden eines Warnsignals bezüglich des Wasserstofflecks umfasst.

14. Windpark (20) nach einem der vorhergehenden Ansprüche, wobei die mehreren Windkraftanlagen (1) in mindestens zwei Windkraftanlagenanordnungen (23) angeordnet sind, die mindestens einen Verteiler (10) und mindestens ein Gaserkennungsmittel (40) pro Windkraftanlagenanordnung (23) umfassen, wobei der Verteiler (10) jeder Windkraftanlagenanordnung (23) mittels einer Wasserstoffverbindung mit dem Verteiler (10) mindestens einer weiteren Windkraftanlagenanordnung (23) gekoppelt ist.

## Revendications

1. Parc éolien (20) comprenant une pluralité d'éoliennes (1), chaque éolienne (1) comprenant un générateur (2), une nacelle (6), et une tour (4) supportant la nacelle (6),
dans lequel chacune des au moins deux éoliennes (1) comprend en outre une unité électrolytique (3) électriquement couplée au générateur (2) de ladite éolienne (1) pour produire de l'hydrogène et une sortie d'hydrogène (8) pour transporter hors de l'éolienne (1) l'hydrogène produit,
dans lequel chaque sortie d'hydrogène (8) est raccordée à un collecteur (10) à l'aide d'une entrée de collecteur (11), dans lequel le collecteur (10) est agencé en-dessous du niveau de la mer (30) et comprend une sortie de collecteur (12) configurée pour être raccordée à un pipeline d'hydrogène (21) pour transporter 1'hydrogène produit par le parc éolien (20) hors du parc éolien (20),
**caractérisé en ce que** ledit parc éolien (20) comprend en outre un moyen de détection de gaz (40) pour détecter une fuite d'hydrogène au niveau du collecteur (10), dans lequel le moyen de détection de gaz (40) comprend un récipient (44) rempli d'un fluide de remplissage (43) ayant une densité supérieure à l'hydrogène, dans lequel le récipient (44) comprend au moins une ouverture pour permettre à l'hydrogène de rentrer dans le récipient (44).

2. Parc éolien (20) selon la revendication 1, dans lequel le moyen de détection de gaz (40) est agencé au-dessus du collecteur (10) d'une manière telle que 1'hydrogène fuyant du collecteur (10) peut être capturé par le moyen de détection de gaz (40).

3. Parc éolien (20) selon l'une quelconque des revendications précédentes, dans lequel le fluide de remplissage (43) est l'eau.

4. Parc éolien (20) selon l'une quelconque des revendications précédentes, dans lequel le récipient (44) comprend un capteur de niveau (47) configuré pour détecter le niveau de remplissage du fluide de remplissage (43), dans lequel le capteur de niveau (47) comprend un moyen de flottaison (48) configuré pour flotter sur le fluide de remplissage (43) tel qu'une tige de flotteur et un corps flottant accouplé à une première extrémité de la tige de flotteur.

5. Parc éolien (20) selon l'une quelconque des revendications précédentes, dans lequel le fluide de remplissage (43) est l'air.

6. Parc éolien (20) selon l'une quelconque des revendications précédentes, dans lequel le récipient (44) comprend un capteur d'hydrogène (42) configuré pour détecter la fuite d'hydrogène.

7. Parc éolien (20) selon l'une quelconque des revendications précédentes, dans lequel le moyen de détection de gaz (40) est fixé au collecteur (10) par des fils (46).

8. Parc éolien (20) selon l'une quelconque des revendications précédentes, dans lequel le moyen de détection de gaz (40) est accouplé au collecteur (10) à l'aide d'un raccordement fluidique (45).

9. Parc éolien (20) selon l'une quelconque des revendications précédentes, dans lequel ledit parc éolien (20) comprend une plaque de base ou un matelas de boue (51) placé(e) sur un fond, préférablement sur un fond marin (50), et accouplé(e) au moyen de détection de gaz (40) pour fournir un support au moyen de détection de gaz (40).

10. Parc éolien (20) selon l'une quelconque des revendications précédentes, dans lequel le moyen de détection de gaz (40) comprend un poids formant ballast (49) fournissant une force descendante sur ledit moyen de détection de gaz (40).

11. Parc éolien (20) selon l'une quelconque des revendications précédentes, dans lequel le moyen de détection de gaz (40) comprend un moyen de flottaison (41) tel qu'une bouée.

12. Parc éolien (20) selon l'une quelconque des revendications précédentes, dans lequel le collecteur (10) et le moyen de détection de gaz (40) sont agencés au niveau, ou à l'intérieur, d'une fondation de l'éolienne (1).

13. Parc éolien (20) selon l'une quelconque des revendications précédentes, dans lequel le moyen de détection de gaz (40) comprend un moyen de transmission pour envoyer un signal d'alerte concernant la fuite d'hydrogène.

14. Parc éolien (20) selon l'une quelconque des revendications précédentes, dans lequel la pluralité d'éoliennes (1) est agencée en au moins deux rangées d'éoliennes (23) comprenant au moins un collecteur (10) et un moyen de détection de gaz (40) par rangée d'éoliennes (23), dans lequel le collecteur (10) de chaque rangée d'éoliennes (23) est accouplé au collecteur (10) d'au moins une autre rangée d'éoliennes (23) à l'aide d'un raccord d'hydrogène.
